# EUROPEAN PATENT SPECIFICATION

(11) **EP 3 376 513 B1**
(45) Date of publication and mention of the grant of the patent: **11.12.2019**
(21) Application number: 17460010.6
(22) Date of filing: 13.03.2017
(51) Int. Cl.: H01F 37/00, H02M 1/12, H01F 27/28

(54) **AN ARRANGEMENT OF LCL FILTER STRUCTURE**
ANORDNUNG EINER LCL-FILTERSTRUKTUR
AGENCEMENT DE STRUCTURE DE FILTRE LCL

(43) Date of publication of application: 19.09.2018
(73) Proprietor: ABB Schweiz AG, 5400 Baden (CH)
(72) Inventor: Polit, Aleksander, 30-198 Krakow (PL); Maciocha, Dariusz, 30-394 Krakow (PL); Szewczyk-Jaszynska, Malgorzata, 30-408 Krakow (PL); Koivula, Ville, 00390 Helsinki (FI); Beck, Christoffer, 02400 Kyrkslatt (FI)
(74) Representative: Wroblewski, Marcin Jan

(56) References cited:
- DE-C- 641 408
- GB-A- 2 161 038
- JP-A- S57 117 216
- US-A- 1 473 862

## Description

### Field of the invention.

The present invention relates to an arrangement of LCL filter structure and specially a filter structure to be connected to the output of inverter or network converter and to the arrangement of chokes.

### Background of the invention

LCL passive filters are one of the most important parts of existing power electronic inverters and well-designed increases the power quality at the output. The output current of the inverter includes sinusoidal wave with higher order of harmonics coming from switching frequency (current ripples) and it is required to filter it before transferring to the electric grid, e.g. solar or wind inverter, or to the load, e.g. electrical machines, electric-arc furnace. In the converters such as solar inverters filter a topology of two inductors and capacitor is commonly used. The most typical design of high power inductors comprises windings and magnetic core made of ferromagnetic material. The electric current flowing in inductor windings produces magnetic field which is closed in a circuit made of magnetic material. The implementation of magnetic core for the inductors application causes several problematic issues:
- due to the risk of magnetic saturation the additional air - gap in magnetic core must be included,
- very often the estimated length of air-gap is relatively long compared to the inductor core size what causes dividing it for several shorter gaps for reducing of fringing flux phenomenon,
- implementation of such complex shape of magnetic core is complicated from manufacturing point of view, because air-gaps must be manufactured in defined and proper sequence,
- operating with high currents (fundamental harmonic) and high frequencies (current ripples) increases power losses in magnetic core material - what may cause overheating of inductors,
- magnetic core material made of steel, amorphous, ferrite, etc. are expensive; the cost of filter inductors can be even ∼30% of total cost of high power inverter.

There is known from US patent application US2015070125 an integral inductor with magnetic cores, which inductor has an arrangement with at least three magnetic loops arranged side by side to each other in a row and at least one winding associated with each of the magnetic loops. The magnetic loops are formed by individual core elements, each of which being part of one of the magnetic loops, and shared core elements, each of which being part of two adjacent of the magnetic loops. The shared core elements are separated from the individual core elements by magnetic gaps and each of the at least one winding is arranged around one of the individual core elements. The disclosure further relates to a use of such integral inductor arrangement within a 3-phase AC-filter for a power inverter for feeding electrical power into a power grid. This solution is material and weight consuming and limited in current handling capability due to the inductor core saturation as well as thermally limited because of core losses. Therefore there are some solutions applied with air-core inductors.

From EP patent application EP 2113928 there is known an inverter filter structure where the filter structure comprises at least one choke per phase (U, V, W) and each choke is an air-core choke. The air-core chokes of the structure are arranged on the same axis such that the magnetic axis of each air core choke corresponds to each other.

From DE202006015609 a three-phase inverter module for frequency converter is known, having a throttle unit with inductor having air-core, for each output phase of inverter. By air-core it was assumed that core has diamagnetic and paramagnetic materials. The module has inverters, which comprise output branches (U1-U3) for each output phase, where the inverters have switching assemblies for each of the output phases. A throttle unit has an inductor (L1) with an air core, for each output phase of the inverter, where the core has diamagnetic and paramagnetic materials. The unit is coupled to the output branch of the corresponding output phase of the inverter.

However in case of air-core inductors, two issues must be addressed. First, presence of magnetic flux in relatively large region in surroundings of coils which is unwanted and causes i.e. heating of metal parts in the proximity of inductors. Secondly, possible coupling between the coils which can lead to destabilizing of filter operation.

From EP granted patent EP1535386 B1 there is known a simple structured choke arrangement which reduces the manufacturing cost. The solution is characterized by the yoke-less chokes. The arrangement comprises the branch specific single-phase chokes whose primary ends are coupled to the output of power semiconductor components and secondary ends are connected to the phase output of the inverter. The single-phase chokes are formed around the yoke-less columnar core. Yoke-less chokes characterized in that the single-phase chokes are protected by a metallic cover to reduce magnetic coupling. Another alternative to avoid undesired magnetic coupling is the symmetric structure.

DE 641 408 discloses a three phase reactor wherein two pairs of coils are used per phase, and those pairs of coils are stacked one above the other.
GB 2 161 038 discloses a particular arrangement of air-core chokes in a three phased system for improving compactness and the mutual inductance.
JP S 57117216 discloses a three-phase reactor with stacked air-core coils, wherein the middle coil is wound opposite the other two in order to reduce the air gaps between the coils.
US 1 473 862 discloses a three phase reactance coil using air-core coil mounted on rectilinear intersecting axes.

### Summary of the invention

The essence of an arrangement of LCL filter structure according to the invention is that the LCL filter structure for a single phase U, V, W has at least one choke with the winding wound around a yokeless, columnar core situated centrally around the other axes Y-Y and Y'-Y'. The axes Y-Y, Y'-Y' are situated parallel to the axes X-X, X'-X' in a such distance that each of the singular chokes of each pair of the chokes is not in contact with any other chokes and a projection of winding wound around the axis Y-Y or Y'-Y', respectively, of at least one choke of each pair of the choke is overlapped on the other winding of the other chokes arranged around axis X-X or on the other winding of the chokes arranged around axis X'-X'. All pairs of the chokes are placed inside the shielding enclosure forming one magnetic screen for all chokes together. Preferably two pairs of the chokes per phase U, V, W, are arranged on the different levels and between the levels air gaps are provided, extended in a direction along the axes X-X and X'-X'.

Preferably the air gap is determined by the length of a capacitor's bus bar connecting the pair of the chokes situated one above the other.

Preferably the yokeless, columnar core is an air core.

Preferably the shielding enclosure is equipped with openings for each output/input of the bus-bars for each phase U, V, W.

Preferably the arrangement is inserted into an external cabinet which is made of different material than magnetic screen.

### The advantages of the invention

In the solution presented in the invention the problem of stray magnetic field generated by air-coils was solved by applying magnetic screen and unwanted coupling between the coils was minimized by special mutual arrangement of coils. The proposed arrangement optimized also cooling of the whole inductors in the cabinet. The invention eliminates closed iron-core, what reduces material cost, weight and simplifies manufacturing steps. Moreover saturation problem is eliminated. Comparing with iron-core solution filter the efficiency is improved especially in operating points below 50% of maximum power. By using of air-core inductors in LCL filter, total cost and weight of the filter is greatly reduced. The construction avoids the problem, which relates to saturation of magnetic materials in the inductors, and provides good filtering characteristics and magnetic characteristics on high frequencies.

### Brief description of the drawings.

The arrangement of LCL filter according to the invention is presented in the exemplary embodiment on the drawing, where:

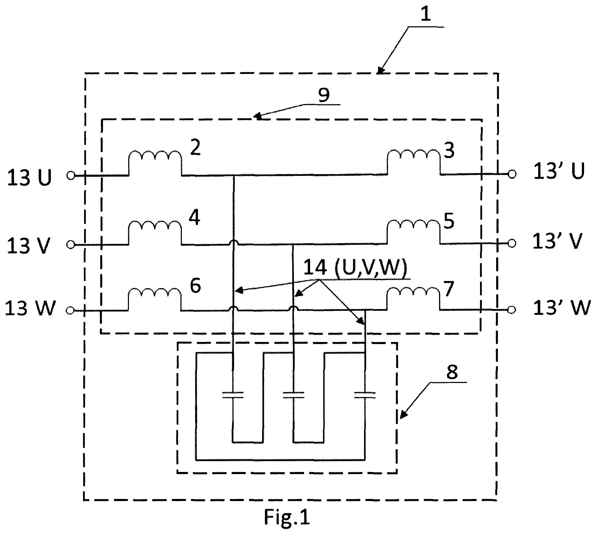

Fig. 1 shows the electrical scheme of LCL filter structure,

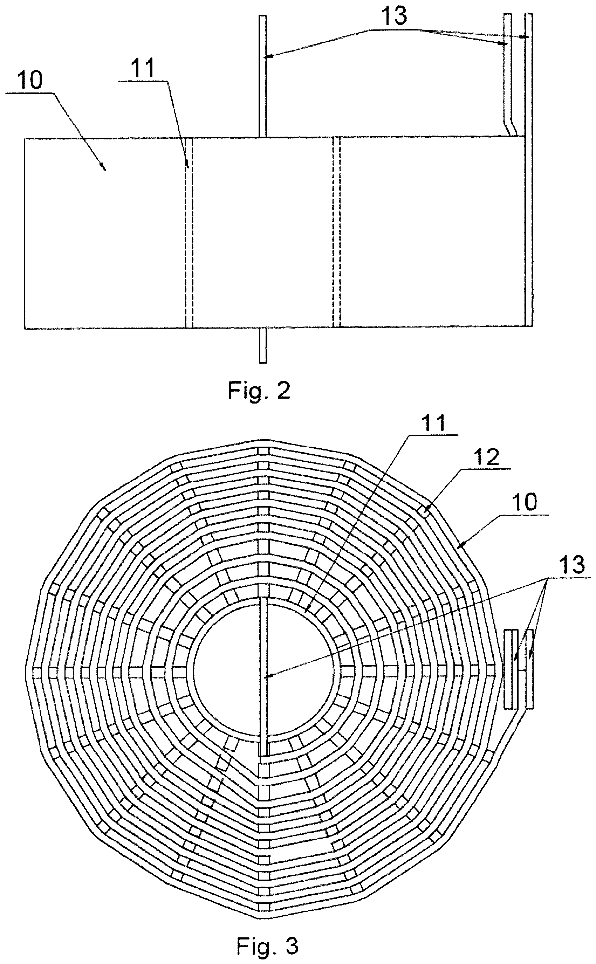

Fig.2 shows a singular choke in the side view,
Fig.3 shows a singular choke in top view,

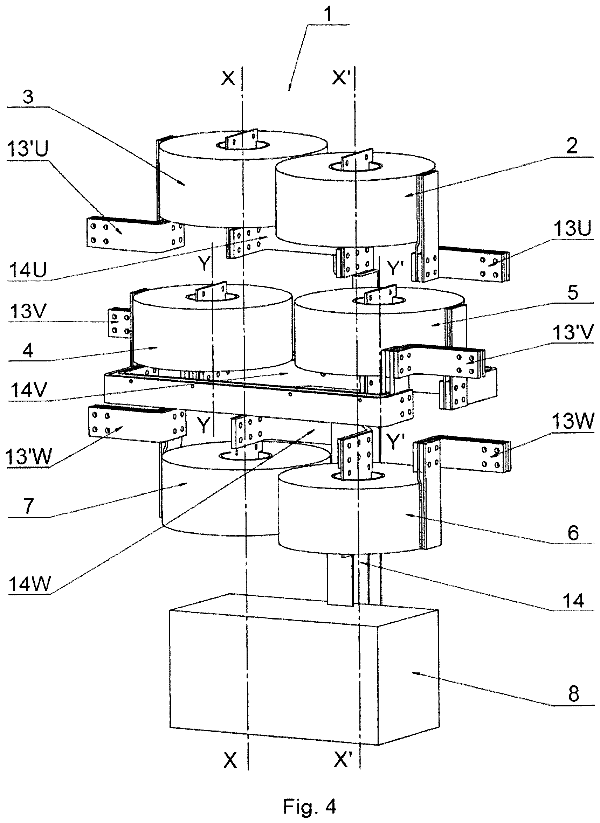

Fig.4 shows the LCL filter arrangement placed inside the shielding housing without showing the shielding housing, in a perspective view,

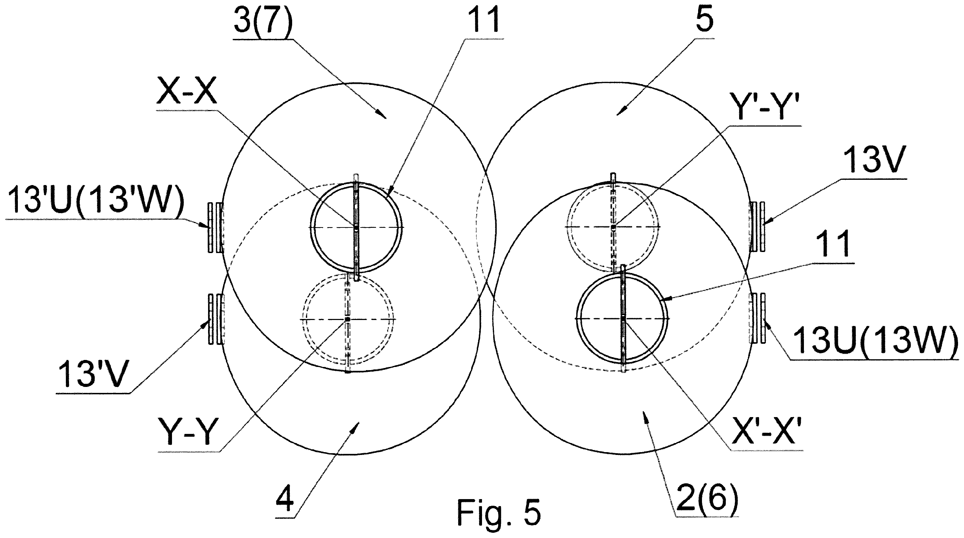

Fig. 5 shows the LCL filter arrangement from fig. 3 in the upper face view

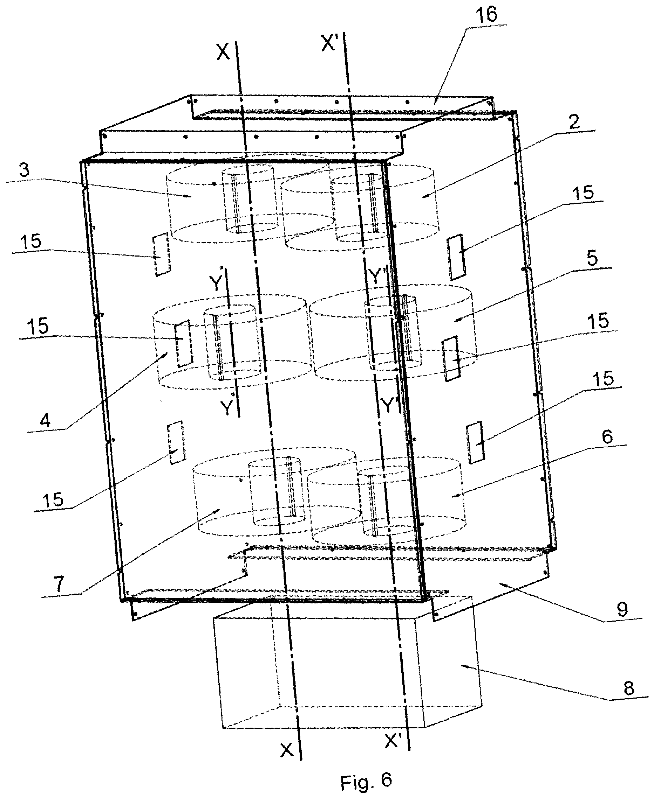

Fig. 6 shows the shielding housing without showing any connections between the different chokes, in a perspective view.

### Detailed description of the invention

A LCL filter structure 1 comprises three pairs of two singular chokes 2,3; 4,5; 6,7. Each of the singular choke is connected electrically together in each pair. Each pair is connected electrically with a capacitor bank 8. The first pair comprises chokes 2 and 3, which are connected electrically to an output/input of a phase U. The second pair comprises chokes 4 and 5, which are connected electrically to an output/input of a phase V. The third pair comprises chokes 6 and 7, which are connected electrically to an output/input of a phase W. Depending on application, inputs can be exchanged with outputs. All pairs of the chokes are placed in a metal shielding enclosure 9. Each of the choke 2-7 has a winding 10 wound around an axis of a yokeless columnar core 11. This means that the winding of a choke is formed around a core that is not closed. In this exemplary embodiment the winding has a form of a rectangular foil. Between the windings 10 an insulator spacers 12 is inserted to allow electrical insulation between windings turns and improve cooling of the chokes. The windings 10 are connected electrically with phase U, V, W through bus-bars 13 (13U, 13'U; 13V, 13'V; 13W, 13'W), respectively. All bus-bars 13 are electrically connected via capacitor's bus-bars 14 (14U, 14V, 14W) with the capacitor banks. The arrangement of the pair of chokes is such that each pair of two chokes connected together are placed in different level on above the capacitor bank 8. Each of the singular chokes of each pair of the chokes is not in contact with the other choke placed in the same level or near the same level of the arrangement. Between the levels of the arrangement of the pairs of the chokes 2,3; 4,5; and 6,7 there are provided air gaps in a direction extended along the axes X-X and Y-Y. The characteristic feature of the LCL filter structure arrangement is explained as following. Windings of chokes 3 and 7 are wound around an axis X-X and arranged in such a way that choke 3 is above the choke 7. Windings of chokes 2 and 6 are wound around an axis X'-X' and arranged in such a way that choke 2 is above the choke 6. Winding of the choke 4 is arranged around the other axis Y-Y, parallel to the axis X-X, and the choke is positioned between the choke 3 and the choke 7. Similar the winding of the choke 5 is arranged around the other axis Y'-Y', parallel to the axis X'-X', and the choke is positioned between the choke 2 and the choke 6. The arrangement of the LCL filter structure in connection with axes X-X, Y-Y, X'-X' and Y'-Y' of the chokes is explained in the following way. For the choke 4 the projections of the winding of the choke 4, wound around the axis Y-Y on the other winding of choke 3 or the choke 7, wound around the axis X-X, are overlapping the windings of at least one of the other windings of the choke 3 or the choke 7, placed on other levels where the pair of the chokes are placed. Similar for the choke 5 the projections of the winding of the choke 5, wound around the axis Y'-Y' on the other winding of choke 2 or the choke 6, wound around the axis X'-X', are overlapping the windings of at least one of the other windings of the choke 2 or the choke 6, placed on other levels where the pair of the chokes are placed. This arrangement allows to minimize unwanted coupling between the coils and improves cooling compare to chokes aligned around one or two axis. To minimize effect on the stray field generated by chokes, a separate shielding enclosure 9 is provided to form a magnetic screen for the filter structure 1. The magnetic screen is made of magnetic material with effective magnetic permeability bigger than 4π*10⁻⁷ H/m and the screen is located around all of the pair of the chokes 2,2; 4,5; 6,7. Capacitor bank 8 is situated outside the magnetic screen. Two wall of the shielding enclosure 9 situated against themselves are provided with the openings 15 for placing there the outputs/inputs of bus-bars 13 (13U, 13'U, 13V, 13'V, 13W, 13'W). The shielding enclosure 9 may be equipped with the cover 16 for security requirement. Additionally the filter structure can be installed in external cabinet made of different material than screen what is not presented in the drawing.

## Claims

1. An arrangement of LCL filter structure, where the filter structure comprises three pairs of two chokes (2, 3), (4, 5), (6, 7) per phase U, V, W, respectively; each of the choke has a winding (10) wound around a yokeless, columnar core (11) having at least two axes X-X, X'-X', **characterised in that** the LCL filter structure for a single phase U,V,W has at least one choke with the winding (10) wound around a yokeless, columnar core (11) situated centrally around the other axes Y-Y, Y'-Y'; the axes Y-Y, Y'-Y' are situated parallel to the axes X-X, X'-X' in such a distance that each of the singular chokes of each pair of the chokes is not in contact with any other chokes, and a projection of winding (10) wound around the axis Y-Y or Y'-Y', respectively, of one choke of each pair of the chokes (4, 5) is overlapped on the other winding (10) of one of the other chokes (3, 7) arranged around axis X-X or on the other winding (10) of one of the other chokes (2, 6) arranged around axis X'-X'; all pairs of the chokes (2, 3), (4, 5), (6, 7) are placed inside a shielding enclosure (9) forming one magnetic screen for all chokes together.

2. An arrangement according to claim 1, **characterized in that** two pairs of the chokes (2, 3), (4, 5), (6, 7) per phase U, V, W, are arranged on the different levels and between the levels air gaps are provided, extended in a direction along the axes X-X and X'-X'.

3. An arrangement according to claim 2, **characterized in that** the thickness of the air gaps is determined by the length of a capacitor's bus bar (14) connecting the two pairs of the chokes situated one above the other.

4. An arrangement according to claims 1-3 **characterized in that** the yokeless, columnar core (11) is an air core.

5. A filter structure according to claims 1-4, **characterized in that** the shielding enclosure (9) is equipped with openings (15) for each output/input of the bus-bars (13) for each phase U, V, W.

6. An arrangement according to any previous claims, **characterized in that** the arrangement is insertable into an external cabinet which is made of different material than magnetic screen.

## Patentansprüche

1. Die Anordnung einer LCL-Filterstruktur, wobei die Filterstruktur drei Paare von zwei Drosseln (2, 3), (4, 5), (6, 7) pro Phase U, V, W umfasst; jede der Drosseln hat eine Wicklung (10), die um einen gabellosen, säulenförmigen Kern (11) mit mindestens zwei Achsen X-X, X'-X' gewickelt ist, **gekennzeichnet dadurch, dass** die LCL-Filterstruktur für eine einzelne Phase U, V, W mindestens eine Drossel aufweist, wobei die Wicklung (10) um einen gabellosen, säulenförmigen Kern (11) gewickelt ist, der zentral um die anderen Achsen Y-Y, Y'-Y' angeordnet ist; die Achsen Y-Y, Y'-Y' parallel zu den Achsen X-X, X'-X' in einem solchen Abstand angeordnet sind, dass jede der einzelnen Drosseln jedes Paares der Drosseln keinen Kontakt zu anderen Drosseln hat, und ein Vorsprung der Wicklung (10), um die Achse Y-Y bzw. Y'-Y' einer Drossel von jedem Paar der Drosseln gewickelt ist (4-5) überlappt die andere Wicklung (10) einer der anderen Drosseln (3, 7) um die Achse X-X oder auf der anderen Wicklung (10) einer der anderen Drosseln (2, 6) angeordnet ist um die Achse X'-X' angeordnet ist; alle Paare der Drosseln (2, 3), (4, 5), (6, 7) sind in einem Abschirmgehäuse (9) angeordnet, das einen magnetischen Schirm für alle Drosseln zusammen bildet.

2. Die Anordnung nach Anspruch 1, **dadurch gekennzeichnet, dass** zwei Paare der Drosseln (2, 3), (4, 5), (6, 7) pro Phase U, V, W auf den verschiedenen Ebenen angeordnet sind und zwischen den Ebenen Luftspalte vorgesehen sind, die sich in einer Richtung entlang der Achsen X-X und X'-X' erstrecken.

3. Die Anordnung nach Anspruch 2, **dadurch gekennzeichnet, dass** die Dicke der Luftspalte durch die Länge der Sammelschiene (14) eines Kondensators bestimmt wird, die die beiden Paare der übereinander angeordneten Drosseln verbindet.

4. Die Anordnung nach den Ansprüchen 1-3, **dadurch gekennzeichnet, dass** der gabellose, säulenförmige Kern (11) ein Luftkern ist.

5. Die Filterstruktur nach den Ansprüchen 1-4, **dadurch gekennzeichnet, dass** das Abschirmgehäuse (9) mit Öffnungen (15) für jeden Ausgang/Eingang der Sammelschienen (13) für jede Phase U, V, W ausgestattet ist.

6. Die Anordnung nach allen früheren Ansprüchen, **dadurch gekennzeichnet, dass** die Anordnung in einen externen Schrank einsetzbar ist, der aus einem anderen Material als der Magnetschirm besteht.

## Revendications

1. Un agencement de structure de filtre LCL, où la structure de filtre comprend trois paires de deux bobines d'arrêt (2, 3), (4, 5), (6, 7) par phase U, V, W, respectivement ; chaque bobine d'arrêt présente un enroulement (10) enroulé autour d'un noyau colonnaire sans bobine de déviation (11), ayant au moins deux axes X-X, X'-X', **caractérisé en ce que** la structure de filtre LCL pour une seule phase U, V, W présente au moins une bobine d'arrêt avec l'enroulement (10) enroulé autour d'un noyau colonnaire sans bobine de déviation (11) situé au centre autour des autres axes Y-Y, Y'-Y'; les axes Y-Y, Y'-Y' sont situés parallèlement aux axes X-X, X'-X' à une distance telle que chacune des bobines d'arrêt singulières de chaque paire de bobines d'arrêt ne soit pas en contact avec aucune autre bobine d'arrêt, et une projection d'enroulement (10) enroulée autour de l'axe YY ou Y'-Y', respectivement, d'une bobine d'arrêt de chaque paire de bobines d'arrêt (4-5) est chevauchée sur l'autre enroulement (10) de l'une des autres bobines d'arrêt (3, 7) disposées autour de l'axe XX ou sur l'autre enroulement (10) de l'une des autres bobines d'arrêt (2, 6) disposées autour de l'axe X'-X' ; toutes les paires des bobines d'arrêt (2, 3), (4, 5), (6, 7) sont placées à l'intérieur d'une enceinte de blindage (9) formant un écran magnétique pour toutes les bobines d'arrêt ensemble.

2. Un agencement selon la revendication 1, **caractérisé en ce que** deux paires de bobines d'arrêt (2, 3), (4, 5), (6, 7) par phase U, V, W sont disposées aux différents niveaux et entre les niveaux des espaces d'air sont fournis, étendus dans une direction suivant les axes XX et X'-X'.

3. Un agencement selon la revendication 2, **caractérisé en ce que** l'épaisseur des espaces d'air est déterminée par la longueur de la barre de bus (14) d'un condensateur reliant les deux paires de bobines d'arrêt situées l'une au dessus de l'autre.

4. Un agencement selon les revendications 1 à 3, **caractérisé en ce que** le noyau colonnaire sans bobine de déviation (11) est un noyau d'air.

5. Une structure de filtre selon les revendications 1 à 4, **caractérisée en ce que** l'enceinte de blindage (9) est équipée d'ouvertures (15) pour chaque sortie/entrée des barres de bus (13) pour chaque phase U, V, W.

6. Un agencement selon l'une quelconque des revendications précédentes, **caractérisé en ce que** l'agencement peut être inséré dans une armoire externe constituée d'un matériau différent de celui de l'écran magnétique.
